**Europäisches Patentamt**

**European Patent Office**

**Office européen des brevets**

(19)

(11) **EP 1 434 454 A1**

(12) **DEMANDE DE BREVET EUROPEEN**

(43) Date de publication:
**30.06.2004 Bulletin 2004/27**

(51) Int Cl.⁷: **H04Q 7/36**

(21) Numéro de dépôt: **03293069.5**

(22) Date de dépôt: **09.12.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **24.12.2002 FR 0216612**

(71) Demandeur: **EVOLIUM S.A.S.**
**75008 Paris (FR)**

(72) Inventeurs:
  • **Gabriel, Anne**
    **75014 Paris (FR)**

  • **Le-Beyec, Frédéric**
    **78114 Magny les Hameaux (FR)**
  • **Pepin, Christophe**
    **78000 Versailles (FR)**

(74) Mandataire: **El Manouni, Josiane**
**Compagnie Financière Alcatel**
**Départememt de Propriété Industrielle,**
**5, rue Noel Pons**
**92734 Nanterre Cedex (FR)**

(54) **Procédé de dimensionnement de réseau de transport pour réseau d'accès radio d'un réseau de radiocommunications mobiles**

(57)    Un des objets de la présente invention est un procédé de dimensionnement de réseau de transport pour réseau d'accès radio d'un réseau de radiocommunications mobiles, ledit procédé comportant une adaptation dynamique de configuration de transport en fonction des besoins en capacité de trafic de transport.

FIG_5

EP 1 434 454 A1

## Description

La présente invention concerne d'une manière générale les systèmes de radiocommunications mobiles.

La présente invention est notamment applicable aux systèmes de radiocomunications mobiles de troisième génération, notamment de type UMTS (« Universal Mobile Telecommunication System »).

D'une manière générale, les systèmes de radiocommunications mobiles font l'objet de normalisation, et pour plus d'informations on pourra se référer aux normes correspondantes, publiées par les organismes de normalisation correspondants.

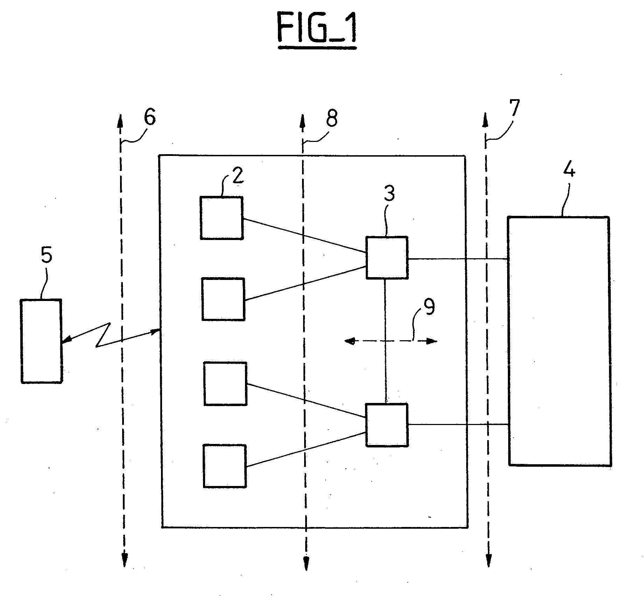

L'architecture générale de ces systèmes est rappelée sur la figure 1, elle comporte essentiellement :

- un réseau d'accès radio 1, ou RAN (pour « Radio Access Network »),
- un réseau coeur 4, ou CN (pour « Core Network »).

Le RAN comporte des éléments de réseau tels que des stations de base 2 et des contrôleurs de stations de base 3. Le RAN est en relation d'une part avec des terminaux mobiles 5, via une interface 6, et d'autre part avec le CN 4 via une interface 7. Le CN 4 est en relation avec des réseaux extérieurs (non illustrés spécifiquement). A l'intérieur du RAN, les stations de base 2 communiquent avec les contrôleurs de stations de base 3 via une interface 8.

Dans les systèmes de troisième génération de type UMTS, le RAN est appelé UTRAN ("UMTS Terrestrial Radio Access Network »), les stations de base sont appelées Node B , les contrôleurs de stations de base sont appelés RNC ("Radio Network Controller"), et les terminaux mobiles sont appelés UE (« User Equipment »). L'interface 6 est appelée interface Uu, l'interface 7 est appelée interface lu, l'interface 8 est appelée interface lub, et une interface 9 entre RNCs, appelée interface lur, est en outre introduite. Le CN contient notamment des éléments de réseau 10 de type MSC (« Mobile Switching Center ») utilisés pour des connexions de type circuit et des éléments de réseau 11 de type SGSN (« Serving GPRS Serving Node» où GPRS est utilisé pour « General Packet Radio Service») utilisés pour des connexions de type paquet. L'interface entre RNC et MSC est aussi appelée interface lu-CS (où CS est utilisé pour « Circuit-Switched ») et l'interface entre RNC et SGSN est aussi appelée interface lu-PS (où PS est utilisé pour « Packet-Switched »). L'interface Uu est aussi appelée interface radio, et les interfaces lub, lur, lu (lu-CS, lu-PS) sont aussi appelées interfaces terrestres.

Pour un Node B donné, le RNC qui le contrôle est aussi appelé CRNC (pour « Controlling Radio Network Controller »). Le CRNC a un rôle de contrôle de charge et d'allocation de ressources radio pour les Node B qu'il contrôle et les cellules couvertes par ces Node B. Pour une communication donnée relative à un UE donné, il existe un RNC, appelé SRNC (pour « Serving Radio Network Controller ») ayant un rôle de contrôle pour la communication considérée. Un Node B connecté à l'UE mais non contrôlé par le SRNC communique avec le SRNC via le RNC qui le contrôle, appelé aussi DRNC (pour « Drift RNC »), via l'interface lur.

Les éléments de réseau du RAN sont reliés entre eux par un réseau de transport, non illustré spécifiquement sur la figure 1. Un lien logique à l'intérieur de ce réseau de transport permet à deux éléments de réseau de communiquer via l'une des interfaces terrestres lub, lur, lu (lu-CS, lu-PS).

D'une manière générale, de tels systèmes doivent pouvoir supporter des trafics dont les besoins en qualité de service (ou QoS, pour « Quality of Service ») peuvent être très différents les uns des autres. L'architecture de QoS dans un système tel que l'UMTS est définie notamment dans la spécification 3GPP TS 23.107 publiée par le 3GPP (« 3rd Generation Partnership Project »). Cette architecture de QoS repose sur des services support caractérisés par des attributs de QoS. On distingue différents services support tels que notamment les services « support accès radio » ou RAB (« Radio Access Bearer »), les services « support radio » ou RB (« Radio Bearer »), et les services « support lu ». On distingue différents attributs de QoS tels que notamment: la classe de trafic (ou « traffic class »), le débit maximal (ou « maximum bitrate »), le débit binaire garanti (ou « guaranteed bitrate »), le délai de transfert (ou « transfer delay »), la priorité de traitement de trafic (ou « traffic handling priority ») ...etc. On distingue en outre quatre classes de trafic, respectivement pour des applications de type conversationnel (ou « conversational »), à flux continu (ou « streaming »), interactif (ou « interactive »), ou d'arrière-plan (ou « background »). On peut aussi distinguer des services de type circuit, ou encore temps réel (tels que notamment des services de voix), pour lesquels la classe de trafic correspond généralement à la classe conversationnelle, qui est la plus exigeante en termes de délai de transfert, et des services de type paquet, ou encore non temps réel (tels que notamment des services de navigation sur le web, ou « web browsing » en anglais, ou encore courrier électronique, ou « e-mail » en anglais, ...etc.) pour lequels la classe de trafic correspond généralement à une autre classe que la classe conversationnelle, moins exigeante en termes de délai de transfert.

D'une manière générale, un modèle a été défini pour les protocoles de communication sur les interfaces terrestres, dans lequel on distingue une couche réseau radio (ou « Radio Network Layer ») correspondant à des fonctionnalités liées à l'accès radio indépendamment de la technologie utilisée pour le transport sur les interfaces terrestres, et une couche réseau de transport (ou « Transport Network Layer ») correspondant à des fonctionnalités liées au transport, fonction de la technologie utilisée pour le transport sur les interfaces terrestres. En outre, pour chacune de ces couches, on distingue un plan utilisateur (ou « User Plane ») et un plan de contrôle (ou « Control Plane »), ces deux plans correspondant à deux types de données pouvant être communiquées selon ces protocoles: des données correspondant à du trafic émis ou reçu par un UE (ou données utilisateur, ou « user data ») et des données correspondant à de la signalisation (ou données de contrôle) nécessaire au fonctionnement du système. On peut également distinguer deux types de signalisation: la signalisation liée à la couche réseau radio, et la signalisation liée à la couche réseau de transport.

La signalisation relative à la couche réseau radio correspond notamment aux protocoles suivants, appelés aussi protocoles d'application:

- pour l'interface Iu, le protocole RANAP (« Radio Network Application Part »), défini notamment dans la spécification 3GPP TS 25.413 publiée par le 3GPP,
- pour l'interface Iub, le protocole NBAP (« Node B Application Part »), défini notamment dans la spécification 3GPP TS 25.433 publiée par le 3GPP,
- pour l'interface Iur, le protocole RNSAP (« Radio Network Subsystem Application Part »), défini notamment dans la spécification 3GPP TS 25.423 publiée par le 3GPP.

Le protocole RANAP inclut notamment la signalisation relative à l'établissement de support d'accès radio (ou RAB, pour « Radio Access Bearer »). Le protocole NBAP inclut notamment la signalisation relative à l'établissement de lien radio pour des cellules contrôlées par le SRNC. Le protocole RNSAP inclut notamment la signalisation relative à l'établissement de lien radio pour des cellules contrôlées par le DRNC.

D'une manière générale, le transport sur les interfaces terrestres utilise le mode paquet. On rappelle que dans le mode circuit les ressources de transmission sont allouées de manière fixe à différents utilisateurs, alors que dans le mode paquet les ressources de transmission sont partagées à tout instant par différents utilisateurs, ce qui permet d'optimiser l'utilisation des ressources de transmission disponibles. Le mode paquet implique cependant des possibilités de congestion et de pertes de paquets. Des techniques telles que notamment un contrôle d'admission des connexions sont généralement prévues, permettant de prévenir les phénomènes de congestion et donc de garantir la QoS à l'intérieur du réseau de transport.

Une des technologies de transport utilisées dans l'UTRAN est la technologie ATM (« Asynchronous Transfer Mode ») basée sur un multiplexage temporel asynchrone de petits paquets de taille fixe appelés cellules. D'une manière générale, la technologie ATM fait l'objet de normalisation, et pour plus d'informations on pourra se référer aux normes correspondantes, publiées par les organismes de normalisation correspondants. On rappelle simplement qu'un réseau ATM peut être modélisé au moyen d'une couche dite couche ATM et d'une couche dite couche d'adaptation à l'ATM (ou couche AAL, pour « ATM Adaptation Layer ») placée entre la couche ATM et les utilisateurs. La couche ATM est orientée connexion, et réalise une transmission de cellules sur une connexion logique entre une source et une destination, cette connexion logique étant aussi appelée circuit virtuel ou VC (pour « Virtual Channel »). Plusieurs circuits virtuels peuvent en outre être regroupés pour former un conduit virtuel ou VP (pour « Virtual Path »). Pour l'application de l'ATM au transport à l'intérieur de l'UTRAN, une couche AAL spécifique, appelée couche AAL2, est utilisée pour les données utilisateur. Lorsqu'un UE communique avec l'UTRAN, une connexion logique correspondante, ou connexion AAL2, est établie sur une ou plusieurs des interfaces terrestres concernées de l'UTRAN.

Dans le cas de l'ATM, la signalisation relative à la couche réseau de transport inclut le protocole ALCAP (« Access Link Control Application Part ») tel que défini notamment dans les spécifications ITU-T Q. 2360-1 et ITU-T Q.2360-2 publiées par l'ITU (« International Telecommunication Union »).

D'autres technologies que l'ATM peuvent être utilisées dans le réseau de transport, telles que notamment la technologie IP (« Internet Protocol »). D'une manière générale, la technologie IP fait également l'objet de normalisation, et pour plus d'informations on pourra également se référer aux normes correspondantes, publiées par les organismes de normalisation correspondants.

D'une manière générale, il est très important de bien dimensionner ces réseaux, en particulier le RAN, pour optimiser à la fois la qualité de service pour les utilisateurs et le coût pour l'opérateur. En effet, si un réseau est sur-dimensionné, la QoS est généralement garantie pour les utilisateurs, mais ceci n'est généralement pas économique pour l'opérateur, puisque des ressources de transmission sont alors prévues ou réservées, qui risquent de ne pas être utilisées. A l'inverse, si un réseau est sous-dimensionné, ceci est généralement plus économique pour l'opérateur, mais moins acceptable pour les utilisateurs, puisque la QoS risque de ne pas être garantie pour ces utilisateurs.

De même qu'on distingue le réseau radio et le réseau de transport, on peut également distinguer le dimensionnement du réseau radio et le dimensionnement du réseau de transport.

Pour le dimensionnement du réseau radio, le problème est de déterminer, notamment, la densité de cellules, leur capacité ou configuration (incluant par exemple, pour un Node B, sa capacité de traitement ou configuration matérielle ou « hardware » en anglais, le nombre de porteuses attribué, ...etc.), ainsi que des paramètres configurables par l'opérateur (tels que par exemple des paramètres de contrôle de transfert intercellulaire (ou « handover » en anglais), de contrôle de puissance, de contrôle d'admission, de contrôle de charge) ...etc. Plus généralement, le problème est de déterminer tout élément ou paramètre permettant de dimensionner le réseau radio, notamment en termes de capacité, de couverture, de qualité de service.

Pour le dimensionnement du réseau de transport, le problème est de déterminer, notamment, la capacité ou configuration des liens logiques correspondant aux interfaces lub, lur, lu (lu-CS, lu-PS). Plus généralement, le problème est de déterminer tout élément ou paramètre permettant de dimensionner le réseau de transport, notamment en termes de capacité et de qualité de service.

Un dimensionnement initial, avant mise en service réelle, est en général déterminé lors d'une phase de planification préalable. Après mise en service réelle, le dimensionnement peut encore être optimisé. Pour cela, des observations ou mesures peuvent être effectuées sur le réseau en fonctionnement, et le dimensionnement du réseau peut être modifié ou adapté en correspondance.

Ces problèmes de dimensionnement ont fait l'objet de nombreuses études dont on pourra trouver des exemples dans la littérature. Cependant ces études s'intéressent généralement au dimensionnement du réseau radio, et non au dimensionnement du réseau de transport. Par ailleurs ces problèmes de dimensionnement sont d'une manière générale plus complexes à résoudre pour les systèmes de troisième génération que pour les systèmes de deuxième génération. Notamment, les systèmes de troisième génération, de type UMTS (« Universal Mobile Telecommunication System ») utilisent une technologie d'accès radio de type CDMA (« Code Division Multiple Access »), alors que les systèmes de deuxième génération, de type GSM (« Global System for Mobile communication ») utilisent une technologie d'accès radio de type TDMA/FDMA (« Time Division Multiple Access / Frequency Division Multiple Access »). En outre, les systèmes de deuxième génération utilisent des technologies de transport basées sur le mode circuit, alors que les systèmes de troisième génération utilisent des technologies de transport basées sur le mode paquet.

La présente invention a notamment pour but de proposer une solution au problème de dimensionnement du réseau de transport, applicable notamment aux systèmes de troisième génération tels que notamment l'UMTS, et permettant notamment d'optimiser les performances, notamment en termes de qualité de service pour les utilisateurs et de coût pour l'opérateur. Un autre avantage d'un procédé de dimensionnement suivant l'invention est d'être précis, rapide et économique pour l'opérateur.

Un des objets de la présente invention est un procédé de dimensionnement de réseau de transport pour réseau d'accès radio d'un réseau de radiocommunications mobiles, ledit procédé comportant une adaptation dynamique de configuration de transport en fonction des besoins en capacité de trafic de transport.

Suivant une autre caractéristique, pour déterminer les besoins en capacité de trafic de transport, on tient compte d'au moins un critère parmi un ensemble de critères incluant:

- les besoins des utilisateurs en capacité de trafic radio,
- la capacité du réseau à écouler le trafic radio,
- la qualité de service de transport.

Suivant une autre caractéristique, pour déterminer les besoins en capacité de trafic sur un lien logique dudit réseau de transport, on tient compte d'au moins un critère parmi un ensemble de critères incluant:

- les besoins des utilisateurs en capacité de trafic radio, pour des cellules attachées à ce lien logique,
- la capacité du réseau à écouler le trafic radio, pour des cellules attachées à ce lien logique,
- la qualité de service sur ce lien logique.

Suivant une autre caractéristique, pour déterminer les besoins des utilisateurs en capacité de trafic radio on prend en compte:

- lors du dimensionnement initial, de prévisions de trafic radio,
- ensuite, après mise en service réelle, d'observations sur le trafic radio.

Suivant une autre caractéristique, pour déterminer la capacité du réseau à écouler le trafic radio, on prend en compte:

- lors du dimensionnement initial, des prévisions de dimensionnement radio cellulaire et de capacité de noeuds de réseau à traiter le trafic radio,
- ensuite, après mise en service réelle, des changements de dimensionnement radio cellulaire et/ou de capacité de noeuds de réseau à traiter le trafic radio.

Suivant une autre caractéristique, lors du dimensionnement initial, pour déterminer les besoins en capacité de trafic de transport, on tient compte des besoins des utilisateurs en capacité de trafic radio et de la capacité du réseau à écouler le trafic radio.

Suivant une autre caractéristique, après mise en service réelle, pour déterminer les besoins en capacité de trafic de transport, on tient compte des besoins des utilisateurs en capacité de trafic radio et/ou de la capacité du réseau à écouler le trafic radio et/ou de la qualité de service de transport.

Suivant une autre caractéristique, les besoins des utilisateurs en capacité de trafic radio dans une cellule sont exprimés au moyen d'un modèle ou descripteur de trafic.

Suivant une autre caractéristique, un descripteur de trafic est défini par un ou plusieurs paramètres incluant, pour chacun des sens montant et descendant :

- le nombre d'utilisateurs actifs simultanément dans cette cellule,
- le type de service (circuit ou paquet) requis par ces utilisateurs,
- le débit pour les services requis par ces utilisateurs.

Suivant une autre caractéristique, les besoins en capacité de trafic sur un lien logique sont exprimés au moyen d'un modèle ou profil de trafic.

Suivant une autre caractéristique, un profil de trafic pour un lien logique est défini par un ou plusieurs paramètres incluant :

- la bande passante minimum nécessaire pour dimensionner le plan utilisateur pour les protocoles de communication sur ce lien logique,
- le nombre maximum d'utilisateurs nécessaire pour dimensionner le plan de contrôle pour les protocoles de communication sur ce lien logique.

Suivant une autre caractéristique, le dimensionnement d'un lien logique est défini par un modèle ou gabarit de configuration de transport.

Suivant une autre caractéristique, un gabarit de configuration de transport pour un lien logique est défini par un ou plusieurs paramètres incluant :

- la bande passante nécessaire pour ce lien logique,
- l'affectation de cette bande passante à différents trafics susceptibles d'être transmis sur ce lien logique, incluant des trafics de données utilisateur, de signalisation relative à la couche réseau radio, et de signalisation relative à la couche réseau de transport, selon les protocoles de communication sur ce lien logique.

Suivant une autre caractéristique, les besoins en capacité de trafic de transport sur un lien logique du réseau de transport peuvent être déduits des besoins en capacité de trafic de transport sur un ou plusieurs autres liens logiques du réseau de transport.

Suivant une autre caractéristique, ledit procédé comporte les étapes suivantes:

- une première étape correspondant à l'expression des besoins des utilisateurs en capacité de trafic radio dans une cellule, au moyen d'un descripteur de trafic pour cette cellule,
- une deuxième étape correspondant à l'expression des besoins en capacité de trafic sur un lien logique du réseau de transport, au moyen d'un profil de trafic, à partir des descripteurs de trafic pour l'ensemble des cellules attachées à ce lien logique,

- une troisième étape correspondant au choix d'un gabarit de configuration de transport pour un lien logique du réseau de transport, à partir du profil de trafic pour ce lien logique.

Suivant une autre caractéristique, la deuxième et la troisième étape sont réalisées par application d'une formule du type:

$$T = f(\Sigma c_i)$$

où:

T est le gabarit de configuration de transport choisi pour ce lien logique,
$\Sigma c_i$ représente la somme des descripteurs de trafic « $c_i$ » pour toutes les cellules attachées à ce lien logique,
« f » représente une fonction permettant de déduire le modèle de configuration de transport T, à partir des descripteurs de trafic « $c_i$ »de toutes les cellules attachées à ce lien logique.

Suivant une autre caractéristique, pour la deuxième et la troisième étape on prend en compte le trafic aggrégé de toutes les cellules attachées à ce lien logique, au lieu de la somme des trafics individuels de toutes ces cellules.

Suivant une autre caractéristique, ledit procédé comporte une étape permettant de choisir un modèle ou gabarit de configuration de transport en fonction d'au moins un critère parmi un ensemble de critères incluant:

- les besoins des utilisateurs en capacité de trafic radio,
- la capacité du réseau à écouler le trafic radio,
- la qualité de service de transport.

Suivant une autre caractéristique, ledit gabarit de configuration de transport est choisi parmi un ensemble de gabarits de configuration de transport prédéterminés ou gabarits de référence.

Suivant une autre caractéristique, ledit procédé comporte en outre une adaptation dynamique de gabarits de référence en fonction des besoins en capacité de trafic de transport.

Un autre objet de la présente invention est un centre d'opération et de maintenance pour réseau de radiocommunications mobiles, comportant des moyens pour mettre en oeuvre un tel procédé.

D'autres objets et caractéristiques de la présente invention apparaîtront à la lecture de la description suivante d'un exemple de réalisation, faite en relation avec les dessins ci-annexés dans lesquels:

- la figure 1 rappelle l'architecture générale d'un système de radiocommunications mobiles,

- les figures 2 à 5 sont des schémas destinés à illustrer des exemples de procédés suivant l'invention.

La présente invention peut aussi être expliquée de la manière suivante.

L'invention prévoit une adaptation dynamique de configuration de transport en fonction des besoins en capacité de trafic de transport.

Pour déterminer les besoins en capacité de trafic de transport on peut tenir compte d'au moins un critère parmi un ensemble de critères incluant, notamment:

- les besoins des utilisateurs en capacité de trafic radio,
- la capacité du réseau à écouler le trafic radio,
- la qualité de service de transport.

Ainsi, pour déterminer les besoins en capacité de trafic sur un lien logique dudit réseau de transport, on peut tenir compte d'au moins un critère parmi un ensemble de critères incluant:

- les besoins des utilisateurs en capacité de trafic radio, pour des cellules attachées à ce lien logique,
- la capacité du réseau à écouler le trafic radio, pour des cellules attachées à ce lien logique,
- la qualité de service sur ce lien logique.

On entend par cellule attachée à un lien logique :

- dans le cas de lien logique Iub (entre un Node B et un RNC), une cellule couverte par ce Node B,
- dans le cas de lien logique Iur (entre un SRNC et un DRNC) une cellule couverte par un Node B contrôlé par ce DRNC,
- dans le cas de lien logique Iu (entre un SRNC et le CN) une cellule couverte par un Node B contrôlé par ce SRNC ou par un DRNC relié à ce SRNC par une interface Iur.

Pour déterminer les besoins des utilisateurs en capacité de trafic radio on peut prendre en compte:

- lors du dimensionnement initial, des prévisions de trafic radio,
- ensuite, après mise en service réelle, des observations sur le trafic radio.

Pour déterminer la capacité du réseau à écouler le trafic radio, on peut prendre en compte:

- lors du dimensionnement initial, des prévisions de dimensionnement radio cellulaire et de capacité d'éléments de réseau à traiter le trafic radio,
- ensuite, après mise en service réelle, des changements de dimensionnement radio cellulaire et/ou de capacité d'éléments de réseau à traiter le trafic radio.

Le dimensionnement radio cellulaire inclut des éléments ou paramètres tels que le nombre de cellules, le nombre de porteuses allouées, des paramètres configurables par l'opérateur (tels que par exemple des paramètres de contrôle de transfert intercellulaire (ou « handover » en anglais), de contrôle de puissance, de contrôle d'admission, de contrôle de charge) ...etc.

Pour des éléments de réseau du réseau d'accès radio, leur capacité à écouler le trafic radio inclut leur capacité de traitement de trafic radio, telle que, notamment, selon l'organisation classique de ces traitements en couches appelées couche 1, couche 2 et couche 3:

- pour un Node B, sa capacité de traitement de couche 1, exprimée par exemple en nombre de cartes d'équipements de traitement en bande de base,
- pour un RNC, sa capacité de traitement de couche 2, exprimée par exemple en nombre de cartes d'équipements pour les traitements correspondants.

Pour des éléments de réseau du coeur de réseau, leur capacité à écouler le trafic radio inclut leur capacité de traitement pour des traitements spécifiques pouvant être prévus dans ces éléments de réseau, tels que notamment :

- pour un MSC, sa capacité de traitement pour la réalisation d'une fonction de transcodage, exprimée par exemple en nombre de cartes d'équipements correspondants.

Lors du dimensionnement initial, pour déterminer les besoins en capacité de trafic de transport sur un lien logique du réseau de transport, on peut tenir compte de prévisions de besoins des utilisateurs en capacité de trafic radio dans la ou les cellules attachées à ce lien logique, et de prévisions de dimensionnement radio cellulaire pour ces cellules et de capacité d'éléments de réseau à écouler ce trafic radio, notamment parce que d'autres données telles que des mesures de QoS de transport sur ce lien logique ne sont pas encore disponibles.

Ensuite, après mise en service réelle, pour déterminer les besoins en capacité de trafic de transport, on peut tenir compte des besoins des utilisateurs en capacité de trafic radio et/ou de la capacité du réseau à écouler le trafic radio et/ou de la qualité de service de transport.

On peut en outre introduire la distinction suivante, correspondant à différentes stratégies de dimensionnement possibles :

- selon une première stratégie, on peut dimensionner un lien logique de façon agressive, c'est-à-dire au plus juste, en fonction du trafic radio prévu ou observé dans les cellules attachées à ce lien logique ; cette première stratégie est plus économique pour l'opérateur, mais moins acceptable pour les utilisateurs , car la QoS risque alors de ne pas être garantie pour ces utilisateurs, si le trafic radio réel devient supérieur au trafic radio pris en compte pour ce dimensionnement,

- selon une deuxième stratégie, on peut dimensionner un lien logique de façon conservatrice, en fonction du dimensionnement radio cellulaire et de la capacité d'éléments de réseau à traiter le trafic radio ; cette deuxième stratégie est plus acceptable pour les utilisateurs (car un tel dimensionnement permet généralement de supporter le trafic réel) mais moins économique pour l'opérateur, puisque des ressources doivent alors être prévues ou réservées, qui risquent alors de ne pas être utilisées.

Les besoins des utilisateurs en capacité de trafic radio dans une cellule peuvent être exprimés au moyen d'un modèle ou descripteur de trafic. Un descripteur de trafic pour une cellule peut être défini par un ou plusieurs paramètres incluant, notamment, pour chacun des sens montant et descendant :

- le nombre d'utilisateurs actifs simultanément dans cette cellule,
- le type de service (circuit ou paquet) requis par ces utilisateurs,
- le débit pour les services requis par ces utilisateurs.

Les besoins en capacité de trafic sur un lien logique peuvent être exprimés au moyen d'un modèle ou profil de trafic permettant de définir ce lien logique pour le réseau de transport. Un profil de trafic pour un lien logique peut être défini par un ou plusieurs paramètres incluant, notamment :

- la bande passante minimum nécessaire pour dimensionner le plan utilisateur, pour les protocoles de communication sur ce lien logique,
- le nombre d'utilisateurs nécessaire pour dimensionner le plan de contrôle, pour les protocoles de communication sur ce lien logique.

Le dimensionnement d'un lien logique peut être défini par un modèle ou gabarit de configuration de transport. Un gabarit de configuration de transport peut être défini par un ou plusieurs paramètres incluant :

- la bande passante nécessaire pour ce lien logique,
- l'affectation de cette bande passante à différents trafics susceptibles d'être transmis sur ce lien logique, incluant notamment des trafics de données utilisateur, de signalisation relative à la couche réseau radio, et de signalisation relative à la couche réseau de transport, selon les protocoles de communication sur ce lien logique.

A titre d'exemple, dans les systèmes utilisant l'ATM comme technologie de transport, cette bande passante est celle nécessaire pour les circuits virtuels (ou « Virtual Channel » ou VC) et les conduits virtuels (ou « Virtual Path » ou VP).

Suivant une autre possibilité, les besoins en capacité de trafic de transport sur un lien logique du réseau de transport peuvent être déduits des besoins en capacité de trafic de transport sur un ou plusieurs autres liens logiques du réseau de transport.

Par exemple, pour dimensionner un lien logique lur, on peut aussi considérer le trafic qui passe sur ce lien logique lur comme une proportion du trafic qui passe sur un lien logique lu. Cette proportion peut dépendre par exemple :

- de données radio (comme le taux de mobile en « soft handover », la vitesse des mobiles, l'environnement radio),
- de données relatives à un modèle de trafic (incluant par exemple la durée des appels, le multiplex de services considérés pour ces appels, ...etc.),
- de la topologie du réseau (taille des cellules, nombre de cellules par Node B, nombre de Nodes B par RNC, nombre de RNCs "voisins" par RNC, un RNC "voisin" étant un RNC relié par une interface lur à un autre RNC).

Typiquement, cette proportion peut varier de 5% à 30%.

Un exemple de procédé suivant l'invention, correspondant à titre d'exemple à la première stratégie de dimensionnement mentionnée précédemment, comporte les étapes suivantes:

- une première étape correspondant à l'expression des besoins des utilisateurs en capacité de trafic radio dans une cellule, au moyen d'un descripteur de trafic,
- une deuxième étape correspondant à l'expression des besoins en capacité de trafic sur un lien logique du réseau de transport, au moyen d'un profil de trafic, à partir des descripteurs de trafic pour l'ensemble des cellules attachées à ce lien logique,
- une troisième étape correspondant au choix d'un gabarit de configuration de transport pour un lien logique du réseau de transport, à partir du profil de trafic pour ce lien logique.

Selon une première possibilité, la deuxième et la troisième étape peuvent être réalisées par application d'une formule du type:

$$T = f(\Sigma c_i)$$

où :

T est le gabarit de configuration de transport choisi pour un lien logique,

$\Sigma c_i$ représente la somme des descripteurs de trafic « $c_i$ » pour toutes les cellules attachées à ce lien logique,

« f » représente une fonction permettant de déduire le gabarit de configuration de transport T, à partir des descripteurs de trafic « $c_i$ » de toutes les cellules attachées à ce lien logique.

Selon cette première possibilité, le trafic radio pour l'ensemble des cellules considérées est la somme des trafics individuels des différentes cellules de cete ensemble.

Une autre possibilité est de prendre en compte le trafic aggrégé de toutes les cellules attachées à ce lien logique, au lieu de la somme des trafics individuels de toutes ces cellules. Le trafic aggrégé est généralement inférieur à la somme des trafics individuels de toutes les cellules, parce que toutes les cellules ne sont pas chargées en même temps. Ceci est particulièrement vrai lorsque le nombre de cellules est important. Lorsque le dimensionnement est sur la base du trafic aggrégé, plutôt que sur la base de la somme des trafics individuels, des ressources de transmission sont alors économisées.

Dans ce qui suit on considère, uniquement à titre d'exemple, le cas du réseau UTRAN, avec une couche de transport basée sur l'ATM, et le problème considéré est à titre d'exemple celui de la configuration de transport d'un lien logique lub.

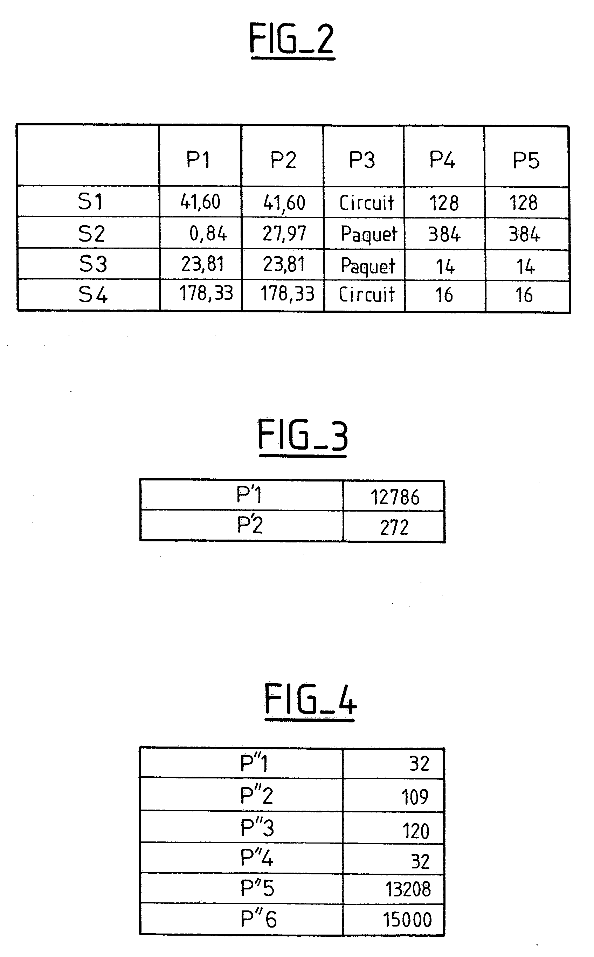

Un exemple de descripteur de trafic pour une cellule UMTS est donné au moyen de la table illustrée sur la figure 2. A titre d'exemple, les services considérés sont des services de : vidéo-conférence (noté S1), navigation sur le web ou « web browsing » en anglais (noté S2), courrier électronique ou « e-mail » en anglais (noté S3), voix (noté S4). Dans cette table sont indiqués, pour chacun de ces services :

- un paramètre (noté P1) correspondant au nombre d'utilisateurs actifs simultanément dans le sens montant,
- un paramètre (noté P2) correspondant au nombre d'utilisateurs actifs simultanément dans le sens descendant,
- un paramètre (noté P3) correspondant au type de service (circuit ou paquet),
- un paramètre (noté P4) correspondant au débit (en kbit/s) requis par les utilisateurs actifs simultanément dans le sens montant,
- un paramètre (noté P5) correspondant au débit (en kbit/s) requis par les utilisateurs actifs simultanément dans le sens descendant.

Un exemple de profil de trafic pour le lien logique lub est donné au moyen de la table illustrée sur la figure 3. Ce profil de trafic a été obtenu en supposant que le Node B couvre une seule cellule, caractérisée par le descripteur de trafic de cellule donné sur la figure 2. Dans la table illustrée sur la figure 3 sont indiqués :

- un paramètre (noté P'1) correspondant à la largeur de bande minimum nécessaire pour le trafic utilisateur, nécessaire pour dimensionner le plan utilisateur,
- un paramètre (noté P'2) correspondant au nombre maximum d'utilisateurs sur l'interface logique, nécessaire pour dimensionner le plan de contrôle.

Sur la base du profil de trafic ainsi obtenu, il est possible de choisir un gabarit de configuration de transport, par exemple parmi un ensemble prédéterminé de gabarits de configuration de transport possibles ou gabarits de référence. Un exemple de gabarit de configuration de transport ainsi obtenu est donné au moyen de la table illustrée sur la figure 4. Dans cette table sont indiqués:

- un paramètre (noté P''1) correspondant à la largeur de bande (en bkit/s) nécessaire pour les circuits virtuels VC pour le protocole ALCAP,
- un paramètre (noté P''2) correspondant à la largeur de bande (en bkit/s) nécessaire pour les circuits virtuels VC pour le protocole NBAP-c,
- un paramètre (noté P''3) correspondant à la largeur de bande (en bkit/s) nécessaire pour les circuits virtuels VC pour le protocole NBAP-d,
- un paramètre (noté P''4) correspondant à la largeur de bande (en bkit/s) nécessaire pour les circuits virtuels VC pour la synchronisation de noeud entre Node B et RNC,
- un paramètre (noté P''5) correspondant à la largeur de bande (en bkit/s) nécessaire pour les circuits virtuels VC pour les données utilisateur,
- la largeur de bande totale nécessaire (en kbit/s).

Dans l'exemple considéré de configuration d'un lien logique lub, la signalisation relative à la couche réseau radio correspond au protocole NBAP, et dans cet exemple une distinction est faite entre NBAP-c (où « c » est utilisé pour canal commun, ou « common channel» en anglais) et NBAP-d (où « d » est utilisé pour canal dédié ou « dedicated channel» en anglais). On rappelle qu'un canal commun est un canal partagé entre différents utilisateurs, alors qu'un canal dédié est un canal alloué spécifiquement à un utilisateur donné.

Le gabarit de configuration choisi est notamment celui des gabarits de référence pour lequel les paramètres P''1, P''2, P''3 correspondent le mieux au paramètre P'2 du profil de trafic, et le paramètre P''5 correspond le mieux au paramètre P'1 du profil de trafic.

Selon le lien logique considéré, d'autres exemples de protocoles et/ou d'affectation de bande passante aux différents trafics susceptibles d'être transmis sur ce lien logique peuvent être considérés.

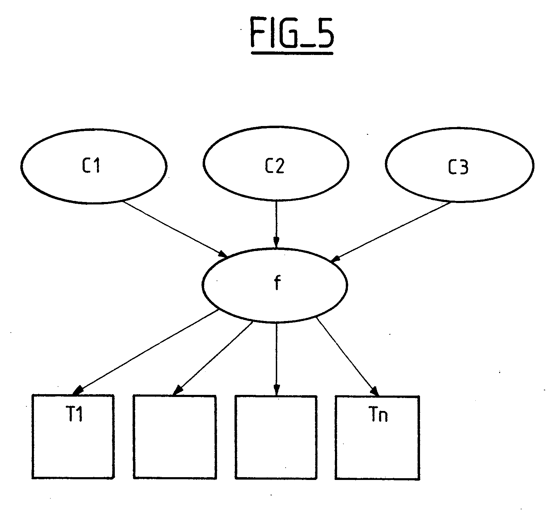

Plus généralement, comme illustré sur la figure 5, un procédé suivant l'invention peut comporter une étape notée « f », permettant de choisir un gabarit de configuration de transport, noté T, notamment parmi un ensemble prédéterminé de gabarits de configuration de transport possibles, ou gabarits de référence, notés T1, ...Tn, en fonction d'au moins un critère parmi un ensemble de critères incluant:

- les besoins des utilisateurs en capacité de trafic radio : critère d'entrée noté C1,
- la capacité du réseau à écouler le trafic radio : critère d'entrée noté C2,
- la qualité de service de transport : critère d'entrée noté C3.

L'étape « f » est de préférence réalisée automatiquement, par application d'un algorithme approprié.

Lors du dimensionnement initial, la configuration de transport peut être choisie en fonction de critères tels que C1 et C2, c'est-à-dire en fonction des besoins des utilisateurs en capacité de trafic radio et de la capacité du réseau à écouler le trafic radio.

Ensuite, lors de l'optimisation du dimensionnement (après mise en service réelle), la configuration de transport peut être adaptée en fonction de critères tels que C1et/ou C2et/ou C3, une nouvelle configuration de transport plus adaptée pouvant être choisie dans le cas de changement (notamment changement significatif) de trafic radio et/ou de changement de capacité du réseau à écouler ce trafic radio et/ou de changement (notamment changement significatif) de QoS de transport. De tels changements sont de préférence détectés automatiquement.

Un changement de capacité du réseau à écouler le trafic radio correspond notamment à un changement de dimensionnement radio cellulaire et/ou de capacité de noeuds de réseau à traiter le trafic radio (par exemple, pour un Node B, ajout de porteuse supplémentaire, ajout de carte supplémentaire de traitement en bande de base, ...etc.).

Un changement significatif de trafic radio est notamment détecté par des mesures de trafic radio, par exemple à partir d'informations sur le trafic contenues dans des messages de signalisation selon les protocoles de la couche réseau radio (protocole d'application RANAP, ou RNSAP, ou NBAP, selon le lien logique considéré, ou protocole de trame « lu Frame Protocol », « lur Frame Protocol», « lub Frame Protocol », selon le lien logique considéré), ou encore au moyen de compteurs donnant des informations sur le trafic sur différentes interfaces.

Un changement significatif de QoS de transport est notamment détecté par des mesures de QoS de transport, telles que notamment des mesures de taux de perte de paquets ou cellules ATM, de temps d'attente, de niveau de remplissage de file d'attente, ...etc.

Par ailleurs, avantageusement, les gabarits de configuration prédéterminés ou de référence peuvent eux-mêmes être optimisés lors de l'optimisation du dimensionnement. Notamment, ces gabarits de référence peuvent être adaptés dynamiquement en fonction des besoins en capacité de trafic de transport (ces besoins pouvant eux-mêmes être déterminés selon l'une ou l'autre des méthodes décrites précédemment). Notamment de nouveaux gabarits de référence peuvent être créés, par exemple par modification d'un ou plusieurs paramètres de gabarits de référence existants, en fonction de critères tels que notamment les critères C1 et/ou C2 et/ou C3 indiqués précédemment.

Par exemple, dans le cas du dimensionnement de la configuration de transport d'un lien logique lub :

- au départ, deux gabarits de référence peuvent être prévus, un gabarit T1 dans lequel un paramètre correspondant à la largeur de bande nécessaire pour le protocole NBAP est égal à 100 kbit/s, et un gabarit T2 dans lequel un paramètre correspondant à la largeur de bande nécessaire pour le protocole NBAP est égal à 200 kbit/s,
- ensuite, en fonction de critères tels que tels que notamment les critères C1 et/ou C2 et/ou C3 indiqués précédemment, on peut par exemple estimer qu'un réglage optimisé de ce paramètre correspond plutôt à 120 kbit/s, et créer automatiquement un nouveau gabarit de référence T'1, dans lequel ce paramètre a la valeur 120 kbit/s.

Un procédé suivant l'invention est notamment mis en oeuvre dans un centre d'opération et de maintenance, ou OMC (pour « Operation & Maintenance Center»), pour réseau de radiocommunications mobiles. Pour la mise en oeuvre d'un tel procédé, ce centre d'opération et de maintenance reçoit, des différents éléments de réseau du RAN, différentes informations nécessaires pour mettre en oeuvre une adaptation dynamique de configuration de transport (comme décrit précédemment), et le résultat, à savoir une nouvelle configuration de transport plus adaptée, peut par exemple être proposé automatiquement à l'opérateur.

La présente invention a ainsi également pour objet un centre d'opération et de maintenance pour réseau de radiocommunications mobiles, comportant des moyens pour mettre en oeuvre un tel procédé. De tels moyens peuvent opérer suivant l'un ou l'autre des procédés décrits précédemment; leur réalisation particulière ne présentant pas de difficulté particulière pour l'homme du métier, de tels moyens ne nécessitent pas d'être décrits ici de manière plus détaillée que ce qui a été fait précédemment, par leur fonction.

**Revendications**

1.  Procédé de dimensionnement de réseau de transport pour réseau d'accès radio d'un réseau de radiocommunications mobiles, ledit procédé comportant une adaptation dynamique de configuration de transport en fonction des besoins en capacité de trafic de transport.

2.  Procédé selon la revendication 1, dans lequel, pour déterminer les besoins en capacité de trafic de transport, on tient compte d'au moins un critère parmi un ensemble de critères incluant:

    -   les besoins des utilisateurs en capacité de trafic radio,
    -   la capacité du réseau à écouler le trafic radio,
    -   la qualité de service de transport.

3.  Procédé selon l'une des revendications 1 ou 2, dans lequel, pour déterminer les besoins en capacité de trafic de transport sur un lien logique dudit réseau de transport, on tient compte d'au moins un critère parmi un ensemble de critères incluant:

    -   les besoins des utilisateurs en capacité de trafic radio, pour des cellules attachées à ce lien logique,
    -   la capacité du réseau à écouler le trafic radio, pour des cellules attachées à ce lien logique,
    -   la qualité de service sur ce lien logique.

4.  Procédé selon l'une des revendications 2 à 3, dans lequel, pour déterminer les besoins des utilisateurs en capacité de trafic radio on prend en compte:

    -   lors du dimensionnement initial, des prévisions de trafic radio,
    -   ensuite, après mise en service réelle, des observations sur le trafic radio.

5.  Procédé selon l'une des revendications 2 à 4, dans lequel, pour déterminer la capacité du réseau à écouler le trafic radio, on prend en compte:

    -   lors du dimensionnement initial, des prévisions de dimensionnement radio cellulaire et de capacité de noeuds de réseau à traiter le trafic radio,
    -   ensuite, après mise en service réelle, des changements de dimensionnement radio cellulaire et/ou de capacité de noeuds de réseau à traiter le trafic radio.

6.  Procédé selon l'une des revendications 2 à 5, dans lequel, lors du dimensionnement initial, pour déterminer les besoins en capacité de trafic de transport, on tient compte des besoins des utilisateurs en capacité de trafic radio et de la capacité du réseau à écouler le trafic radio.

7.  Procédé selon l'une des revendications 2 à 6, dans lequel, après mise en service réelle, pour déterminer les besoins en capacité de trafic de transport, on tient compte des besoins des utilisateurs en capacité de trafic radio et/ou de la capacité du réseau à écouler le trafic radio et/ou de la qualité de service de transport.

8.  Procédé selon l'une des revendications 2 à 7, dans lequel les besoins des utilisateurs en capacité de trafic radio dans une cellule sont exprimés au moyen d'un modèle ou descripteur de trafic.

9.  Procédé selon la revendication 8, dans lequel un descripteur de trafic est défini par un ou plusieurs paramètres incluant, pour chacun des sens montant et descendant :

    -   le nombre d'utilisateurs actifs simultanément dans cette cellule,
    -   le type de service (circuit ou paquet) requis par ces utilisateurs,
    -   le débit pour les services requis par ces utilisateurs.

10. Procédé selon l'une des revendications 1 à 9, dans lequel les besoins en capacité de trafic de transport sur un lien logique sont exprimés au moyen d'un modèle ou profil de trafic.

11. Procédé selon la revendication 10, dans lequel un profil de trafic de transport sur un lien logique est défini par un ou plusieurs paramètres incluant :

    -   la bande passante minimum nécessaire pour dimensionner le plan utilisateur pour les protocoles de communication sur ce lien logique,
    -   le nombre maximum d'utilisateurs nécessaire pour dimensionner le plan de contrôle pour les protocoles de communication sur ce lien logique.

12. Procédé selon l'une des revendications 1 à 11, dans lequel le dimensionnement d'un lien logique du réseau de transport est défini par un modèle ou gabarit de configuration de transport.

13. Procédé selon la revendication 12, dans lequel un gabarit de configuration de transport pour un lien logique du réseau de transport est défini par un ou plusieurs paramètres incluant :

    -   la bande passante nécessaire pour ce lien logique,
    -   l'affectation de cette bande passante à différents trafics susceptibles d'être transmis sur ce lien logique, incluant des trafics de données utilisateur, de signalisation relative à la couche réseau radio, et de signalisation relative à la couche réseau de transport, selon les protocoles de communication sur ce lien logique.

14. Procédé selon l'une des revendications 1 à 13, dans lequel les besoins en capacité de trafic de transport sur un lien logique du réseau de transport sont déduits des besoins en capacité de trafic de transport sur un ou plusieurs autres liens logiques du réseau de transport.

15. Procédé selon l'une des revendications 1 à 14, comportant les étapes suivantes:

    - une première étape correspondant à l'expression des besoins des utilisateurs en capacité de trafic radio dans une cellule, au moyen d'un descripteur de trafic pour cette cellule,
    - une deuxième étape correspondant à l'expression des besoins en capacité de trafic sur un lien logique du réseau de transport, au moyen d'un profil de trafic, à partir des descripteurs de trafic pour l'ensemble des cellules attachées à ce lien logique,
    - une troisième étape correspondant au choix d'un gabarit de configuration de transport pour un lien logique du réseau de transport, à partir du profil de trafic pour ce lien logique.

16. Procédé selon la revendication 15, dans lequel la deuxième et la troisième étape sont réalisées par application d'une formule du type:

$$T = f(\Sigma c_i)$$

    où:

    T est le gabarit de configuration de transport choisi pour ce lien logique,
    $\Sigma c_i$ représente la somme des descripteurs de trafic « $c_i$ » pour toutes les cellules attachées à ce lien logique,
    « f » représente une fonction permettant de déduire le modèle de configuration de transport T, à partir des descripteurs de trafic « $c_i$» de toutes les cellules attachées à ce lien logique.

17. Procédé selon la revendication 16, dans lequel pour la deuxième et la troisième étape on prend en compte le trafic aggrégé de toutes les cellules attachées à ce lien logique, au lieu de la somme des trafics individuels de toutes ces cellules.

18. Procédé selon l'une des revendications 1 à 17, comportant une étape permettant de choisir un gabarit de configuration de transport en fonction d'au moins un critère parmi un ensemble de critères incluant:

    - les besoins des utilisateurs en capacité de trafic radio,
    - la capacité du réseau à écouler le trafic radio,
    - la qualité de service de transport.

19. Procédé selon la revendication 18, dans lequel ledit gabarit de configuration de transport est choisi parmi un ensemble de gabarits de configuration de transport prédéterminés ou gabarits de référence.

20. Procédé selon la revendication 19, comportant en outre une adaptation dynamique des gabarits de référence en fonction des besoins en capacité de trafic de transport.

21. Centre d'opération et de maintenance pour réseau de radiocommunications mobiles, comportant des moyens pour mettre en oeuvre un procédé selon l'une des revendications 1 à 20.

# FIG_1

## FIG_2

|     | P1     | P2     | P3      | P4  | P5  |
| --- | ------ | ------ | ------- | --- | --- |
| S1  | 41,60  | 41,60  | Circuit | 128 | 128 |
| S2  | 0,84   | 27,97  | Paquet  | 384 | 384 |
| S3  | 23,81  | 23,81  | Paquet  | 14  | 14  |
| S4  | 178,33 | 178,33 | Circuit | 16  | 16  |

## FIG_3

| P'1 | 12786 |
| --- | ----- |
| P'2 | 272   |

## FIG_4

| P''1 | 32    |
| ---- | ----- |
| P''2 | 109   |
| P''3 | 120   |
| P''4 | 32    |
| P''5 | 13208 |
| P''6 | 15000 |

# FIG_5

**Office européen des brevets**

**RAPPORT DE RECHERCHE EUROPEENNE**

Numéro de la demande

EP 03 29 3069

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | SESHY MADHAVAPEDDY ET AL: "THE DESIGN OF SELF ENGINEERING MOBILE TELEPHONE SYSTEMS" ISS '95. WORLD TELECOMMUNICATIONS CONGRESS. (INTERNATIONAL SWITCHING SYMPOSIUM). ADVANCED SWITCHING TECHNOLOGIES FOR UNIVERSAL TELECOMMUNICATIONS AT THE BEGINNING OF THE 21ST. CENTURY. BERLIN, APR. 23 - 28, 1995, PROCEEDINGS OF THE INTERNATIONAL SWIT, vol. 1 SYMP. 15, 23 avril 1995 (1995-04-23), pages 426-430, XP000495607 ISBN: 3-8007-2093-0 | 1,21 | H04Q7/36 |
| A | * page 1, colonne de gauche, ligne 13 - ligne 25 * <br> * page 3, colonne de gauche, ligne 55 - colonne de droite, ligne 45 * <br> --- | 2-20 | |
| X | US 2002/102981 A1 (JECHOUX BRUNO) 1 août 2002 (2002-08-01) | 1,21 | |
| A | * alinéa [0006] * <br> * alinéa [0026] - alinéa [0052] * <br> --- | 2-20 | **DOMAINES TECHNIQUES RECHERCHES (Int.Cl.7)** <br> H04Q <br> H04L |
| A | WO 02 056564 A (OPERAX AB ;LARSSON ANDERS (SE); SCHELEN OLOV (SE); NORRGAARD JOAKI) 18 juillet 2002 (2002-07-18) <br> * page 8, ligne 20 - page 10, ligne 10; figures 2,6 * <br> --- | 1-21 | |
| A | US 6 216 006 B1 (SCHOLEFIELD CHRISTOPHER ET AL) 10 avril 2001 (2001-04-10) <br> * le document en entier * <br> --- | 1-21 | |
| A | WO 02 080602 A (MINERVINI DANIELA ;PASCALI FRANCESCA (IT); LEPSCHY CHIARA (IT); MI) 10 octobre 2002 (2002-10-10) <br> * page 6, ligne 27 - page 7, ligne 4; revendications 1,2 * <br> ----- | 1-21 | |

Le présent rapport a été établi pour toutes les revendications

| Lieu de la recherche | Date d'achèvement de la recherche | Examinateur |
|---|---|---|
| MUNICH | 20 février 2004 | Grimaldo, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**                    EP 03 29 3069

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-02-2004

| Document brevet cité au rapport de recherche | | Date de publication | Membre(s) de la famille de brevet(s) | | Date de publication |
|---|---|---|---|---|---|
| US 2002102981 | A1 | 01-08-2002 | FR | 2820270 A1 | 02-08-2002 |
| | | | EP | 1227697 A1 | 31-07-2002 |
| | | | JP | 2002315049 A | 25-10-2002 |
| WO 02056564 | A | 18-07-2002 | EP | 1354456 A1 | 22-10-2003 |
| | | | WO | 02056564 A1 | 18-07-2002 |
| US 6216006 | B1 | 10-04-2001 | AU | 734357 B2 | 14-06-2001 |
| | | | AU | 8685898 A | 24-05-1999 |
| | | | CA | 2306888 A1 | 14-05-1999 |
| | | | CN | 1126384 B | 29-10-2003 |
| | | | DE | 19882747 T0 | 12-10-2000 |
| | | | FI | 20000969 A | 25-04-2000 |
| | | | FR | 2770716 A1 | 07-05-1999 |
| | | | GB | 2346298 A ,B | 02-08-2000 |
| | | | SE | 521381 C2 | 28-10-2003 |
| | | | SE | 0001549 A | 30-06-2000 |
| | | | WO | 9923842 A1 | 14-05-1999 |
| WO 02080602 | A | 10-10-2002 | IT | TO20010297 A1 | 30-09-2002 |
| | | | CA | 2442547 A1 | 10-10-2002 |
| | | | EP | 1374617 A1 | 02-01-2004 |
| | | | WO | 02080602 A1 | 10-10-2002 |

Pour tout renseignement concernant cette annexe : voir Journal Officiel de l'Office européen des brevets, No.12/82